# EUROPEAN PATENT APPLICATION

(11) **EP 2 105 225 A1**
(43) Date of publication of application: **30.09.2009**
(21) Application number: 09155993.0
(22) Date of filing: 24.03.2009
(51) Int. Cl.: B23B 27/10, B23Q 11/10

(54) **Aggregate head for machine tools**

(30) Priority: 26.03.2008 IT BO20080190
(71) Applicant: Pada Engineering - S.r.l., Saltara (IT)
(72) Inventor: Savelli, Emiliano, 60019 Senigallia (IT); Franchini, Fabio, 61032 Fano (IT)
(74) Representative: Jorio, Paolo

(57) **Abstract**

An aggregate head for machine tools is provided with a tool (11) inserted into a tubular end (9) of a tool-carrying member (2) and with a vortex tube (13) to convert an input flow of compressed air into two output flows having a temperature higher and, respectively, lower than a temperature of the input flow and to supply the output flow at the lower temperature to the tubular end (9).

## Description

The present invention relates to an aggregate head for machine tools.

In the machine tools sector, a prior art aggregate head comprises a tubular tool-carrying member that is normally coupled to an electric spindle in order to rotate about a given longitudinal axis thereof; and a tool inserted into a free end of the tool-carrying member.

Moreover, the tool-carrying member is connected to a supply device suitable to supply a liquid coolant firstly along the tool-carrying member and then through the tool in order to cool the tool and remove any shavings and/or edge trimmings generated, in use, by said tool.

The prior art aggregate heads for machine tools of the type described above have some drawbacks, mainly owing to the fact that the liquid coolant, which generally consists of high-pressure water and oil, is not suitable for use in certain machining processes, for example, of wood and/or plastic and in any case always requires the presence of a system for collecting the liquid coolant discharged from the tool.

It is an object of the present invention to provide an aggregate head for machine tools that overcomes the drawbacks described above and that is simple and inexpensive to produce.

According to the present invention there is provided an aggregate head for machine tools according to that set forth in the appended claims.

The present invention will now be described with reference to the accompanying drawings, illustrating a non-limiting embodiment thereof, in which:
figure 1 is a schematic longitudinal view, with parts removed for the sake of clarity, of a preferred embodiment of the aggregate head for machine tools according to the present invention; and
figure 2 is an axial view of a detail of figure 1.

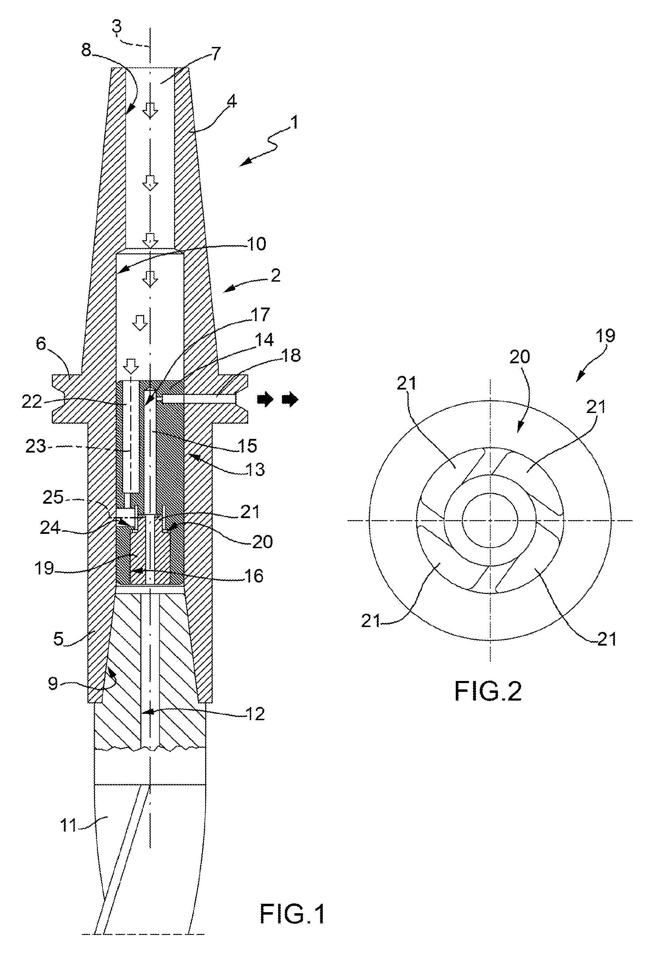

With reference to figure 1, designated as a whole by number 1 is an aggregate head for machine tools comprising an elongated tubular tool-carrying member 2, which has a given longitudinal axis 3, and comprises a truncated cone-shaped portion 4 for coupling with a known electric spindle (not shown) which is suitable to impart a rotary motion to said member 2 about said axis 3, and a cylindrical portion 5 connected to the portion 4 in correspondence with an intermediate flange 6 protruding radially outwards from the outside surface of the member 2.

A hole 7 passes axially through the member 2 and comprises a narrow cylindrical end section 8 obtained in correspondence with the portion 4 and connected to a known compressed air supply device (not shown), a truncated cone-shaped end section 9 obtained in correspondence with the portion 5, and a wide intermediate cylindrical section 10 which links the sections 8 and 9.

A tool 11, in the specific case a drilling bit, is inserted in a known way into the section 9 and is provided with a supply duct 12 passing through the tool 11 and communicating with the atmosphere.

The section 10 internally houses a vortex tube 13 comprising a cylindrical bar 14 fixed to the inside of the hole 7 coaxially with respect to the axis 3 and provided with a hole 15, which extends coaxially with respect to the axis 3, and comprises a wide cylindrical portion 16 facing the tool 11 and a narrow cylindrical portion 17 communicating with the atmosphere via a radial outlet duct 18, which extends transversely with respect to the axis 3, and passes partially through the bar 14 and partially through the flange 6.

The portion 16 internally houses a cylindrical coupling 19, which is limited axially, in correspondence with an end thereof facing the portion 17, by a surface 20 orthogonal to the axis 3, and has a plurality of teeth 21 (figure 2) that protrude axially from the surface 20, and are evenly distributed around said axis 3.

The tube 13 also comprises an inlet hole 22, which has a longitudinal axis 23 parallel to the axis 3, communicates pneumatically with the section 8 and, thus, with said compressed air supply device (not shown), and also communicates with the hole 15 via an inlet fitting 24, which has a longitudinal axis 25 orthogonal to the axis 3, and is obtained through the bar 14 in a position facing the teeth 21.

In use, the teeth 21 of the coupling 19 impart a substantially spiral motion to the compressed air fed into the hole 15 through the hole 22 and the fitting 24 that flows along the axis 3 so as to separate the input flow into two output flows, one of which is vented into the atmosphere through the portion 17 and the duct 18 and the other is supplied to the section 9 and, thus, to the duct 12 through the coupling 19.

With regard to the above description it is important to note that the air flowing out of the duct 18 is vented into the atmosphere at an output temperature that is higher than the temperature at which the air enters the tube 13 and that the air flowing out of the coupling 19 is supplied to the duct 12 at an output temperature that is lower than the temperature at which the air enters the tube 13 in order to cool the tool 11 and remove the shavings and/or edge trimmings generated, in use, by said tool 11.

According to an alternative not shown embodiment, the vortex tube 13 is arranged externally with respect to the tool-carrying device 2, and is connected to the hole 7 to supply the air flow at a lower temperature along the duct 12 of the tool 11.

## Claims

1. Aggregate head for machine tools comprising a tool-carrying member (2), which has a given longitudinal axis (3), can be coupled to a drive device to rotate about the axis (3), and is provided with a tubular end (9); a tool (11) inserted into said tubular end (9); and a supply device (13) to supply a cooling fluid into said tubular end (9); and **characterized in that** the supply device (13) comprises a vortex tube (13) which in turn comprises a separation chamber (17, 19), an inlet (24) through which a pressurized gas enters the separation chamber (17, 19), and a first and a second outlet (18, 19) through which two gas flows leave the separation chamber (17, 19) at a higher and, respectively, lower temperature than a temperature of the gas entering through said inlet (24); the second outlet (19) being connected to said tubular end (9).

2. Aggregate head according to claim 1, wherein the first outlet (18) communicates with the atmosphere.

3. Aggregate head according to claim 1 or 2, wherein the vortex tube (13) is arranged externally with respect to the tool-carrying member (2).

4. Aggregate head according to claim 1 or 2, wherein the tool-carrying member (2) is tubular and internally houses the vortex tube (13).

5. Aggregate head according to claim 4, wherein the vortex tube (13) comprises a duct (22) to supply the gas to said inlet (24); the supply duct (22) having a longitudinal axis (23) that is substantially parallel to the longitudinal axis (3) of the tool-carrying member (2).

6. Aggregate head according to claim 4 or 5, wherein the tool-carrying member (2) comprises a further tubular end (8) opposite said tubular end (9) and suitable to enable the gas to enter the tool-carrying device (2).

7. Aggregate head according to any one of the previous claims, wherein the separation chamber (17, 19) and the inlet (24) have respective longitudinal axes (3, 25) that are substantially orthogonal to one another.

8. Aggregate head according to any one of the previous claims, wherein the separation chamber (17, 19) has a longitudinal axis (3) that is substantially parallel to the longitudinal axis (3) of the tool-carrying member (2).

9. Aggregate head according to any one of the previous claims, wherein the vortex tube (13) comprises a generating member (19) to impart to the gas entering the separation chamber (17, 19) a motion substantially straight along a cylindrical vortex extending along said separation chamber (17, 19).

10. Aggregate head according to claim 9, wherein the generating member (19) is cylindrical in shape, and is provided with a plurality of teeth (21), which protrude axially from an end surface (20) of the generating member (19), and are arranged in a position facing the inlet (24).

11. Aggregate head according to any one of the previous claims, wherein the tool (11) is provided with a further supply duct (12) communicating with the second outlet (19) to supply the gas through said tool (11).

12. Aggregate head according to any one of the previous claims, wherein the pressurized gas is compressed air.
